(19) Europäisches Patentamt
European Patent Office
Office européen des brevets

(11) **EP 0 900 586 B1**

(12) **EUROPÄISCHE PATENTSCHRIFT**

(45) Veröffentlichungstag und Bekanntmachung des Hinweises auf die Patenterteilung:
**24.09.2003   Patentblatt 2003/39**

(51) Int Cl.7: **B01D 53/79**

(21) Anmeldenummer: **97114910.9**

(22) Anmeldetag: **28.08.1997**

(54) **Verfahren zur Einrichtung einer Düsenanordnung in einem Waschturm**

Process for the installation of an arrangement of spray nozzles in a scrubber

Procédé pour l'installation d'un arrangement de buses de pulvérisation dans une tour de lavage

(84) Benannte Vertragsstaaten:
**DE GB IT**
Benannte Erstreckungsstaaten:
**RO**

(43) Veröffentlichungstag der Anmeldung:
**10.03.1999   Patentblatt 1999/10**

(73) Patentinhaber: **Lurgi Energie und Entsorgung GmbH**
**40880 Ratingen (DE)**

(72) Erfinder: **Risse, Theo, Dipl.-Phys.**
**59368 Werne (DE)**

(74) Vertreter: **Albrecht, Rainer Harald, Dr.-Ing. et al**
**Patentanwälte**
**Andrejewski, Honke & Sozien,**
**Theaterplatz 3**
**45127 Essen (DE)**

(56) Entgegenhaltungen:
**EP-A- 0 524 729           WO-A-95/25931**
**GB-A- 2 297 705**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Düsenanordnung für einen Waschturm, der einen Waschflüssigkeitssumpf, eine einbautenfreie Absorptionszone und mindestens eine Düsenebene oberhalb der Absorptionszone aufweist, mit Verteiler, Abzweigleitungen und Düsen, deren Sprühkegel sich überlappen, wobei die Düsen mit seitlich abgehenden Zwischenstücken an die Abzweigleitungen angeschlossen sind. Der zu reinigende Gasstrom wird im Gleich- oder Gegenstrom zur Waschflüssigkeit durch die Absorptionszone geführt. Bevorzugt ist eine Gegenstromführung, wobei der Gasstrom von unten nach oben durch die Absorptionszone strömt und den Waschturm oberhalb der Düsenebenen verlässt. Die Erfindung bezieht sich insbesondere auf die Düsenanordnung eines Waschturms, der zur Rauchgasentschwefelung eingesetzt wird und einen Durchmesser von mehreren Metern aufweist.

Die Düsenanordnung, von der die Erfindung ausgeht, umfasst eine oder mehrere Düsenebenen mit jeweils einem Verteiler, der in einer Symmetrieachse des Waschturmquerschnitts angeordnet ist und sich über den gesamten Querschnitt des Waschturms erstreckt. Rechts und links schließen in äquidistanten Abständen die Abzweigleitungen an, an die in einer ebenfalls symmetrischen Verteilung Zwischenstücke mit endseitigen, nach unten sprühende Düsen angeordnet sind (GB-A-2 297 705). Die Düsenverteilung wird so eingerichtet, dass die Sprühkegel der Düsen sich überlappen und der Waschturmquerschnitt möglichst gleichmäßig mit Düsen belegt ist. Angestrebt wird eine möglichst gleichmäßige Flächenbelegung nach geometrischen Gesichtspunkten.

Die Erfindung geht aus von der Erkenntnis, dass bei Konzentrationsmessungen im gewaschenen Gasstrom oberhalb der Düsenebenen trotz gleichmäßiger Düsen-Flächenbelegung örtlich hohe Schadgaskonzentrationen festgestellt werden können. Der gewaschene Gasstrom enthält Strähnen, die in der Absorptionszone nicht ausreichend mit Waschflüssigkeit in Kontakt gekommen sind. Die im Gasstrom verbleibenden Schadgassträhnen verschlechtern den Absorptionswirkungsgrad. Wird ein vorgegebener Absorptionswirkungsgrad nicht erreicht, muss die Länge der Absorptionszone vergrößert und/oder müssen weitere Düsenebenen mit Düsen eingebaut sowie die Waschflüssigkeitsmenge entsprechend erhöht werden. Das ist aufwendig und mit zusätzlichen Betriebskosten für die höhere Pumpenleistung verbunden. Eine Umrüstung vorhandener Waschtürme ist in vielen Fällen kaum möglich.

Der Erfindung liegt die Aufgabe zugrunde, ein Verfahren anzugeben, um eine Düsenanordnung für einen Waschturm festzulegen, die sicherstellt, dass der zu reinigende Gasstrom gleichmäßig gewaschen wird und Schadgassträhnen im gewaschenen Gasstrom nicht mehr auftreten.

Gegenstand der Erfindung und Lösung dieser Aufgabe ist ein Verfahren zur Einrichtung einer aus Verteiler, Abzweigleitungen und Düsen bestehenden Düsenanordnung in einem Waschturm, der einen Waschflüssigkeitssumpf, eine einbautenfreie Absorptionszone und mindestens eine Düsenebene oberhalb der Absorptionszone aufweist, wobei die Düsen mit seitlich abgehenden Zwischenstücken an die Abzweigleitungen angeschlossen werden und wobei

a) die örtlichen Konzentrationen der aus einem Gasstrom zu absorbierenden Komponente oberhalb der Düsenebene an einer Mehrzahl N rasterförmig im Querschnitt des Waschturms angeordneten Stellen gemessen werden,

b) die Konzentrationswerte mit einem aus den Messwerten gebildeten Mittelwert verglichen werden,

c) bei Abweichungen, die einen vorgegebenen Toleranzbereich überschreiten, die Position einer oder mehrerer Düsen verändert wird und

d) die Schritte a) bis c) so lange wiederholt werden, bis die Konzentrationsmesswerte einen annähernd gleichen Wert besitzen.

Die Erfindung beruht auf der Erkenntnis, dass die Ausbreitung der Sprühkegel keine geeignete Bezugsgröße darstellt, um die Düsenverteilung festzulegen. Als geeignete Bezugsgröße für die Düsenverteilung ist die Konzentrationsverteilung im Gasstrom unmittelbar oberhalb der Düsenebene heranzuziehen. Die Schritte a) bis d) lehren ein methodisches Vorgehen bei der Festlegung der Düsenverteilung. Es resultiert eine Düsenverteilung, die nach geometrischen Gesichtspunkten unsymmetrisch ist. Die technische Umsetzung der Düsenverteilung erfolgt mittels Zwischenstücken, deren Position und Länge für jede Düse individuell festgelegt wird.

Im Rahmen der Erfindung liegt es, dass bei der Festlegung der Düsenverteilung die Konzentration im Schritt a) oberhalb der Düsenebene messtechnisch erfasst wird. Werden lokale Konzentrationsabweichungen von dem Mittelwert gemessen, so werden Länge und Position der Zwischenstücke für eine oder mehrere Düsen, deren Sprühkegel den betreffenden Bereich der Absorptionszone beaufschlagen, verändert; Messung und Korrektur der Düsenverteilung werden wiederholt, bis die Konzentrationswerte einen annähernd gleichen Wert besitzen.

Die vorstehend beschriebenen Maßnahmen bieten sich insbesondere für die Feinabstimmung an. Vorzugsweise werden bei der Festlegung der Düsenverteilung die Konzentrationen im Schritt a) zunächst durch Rechnersimulation ermittelt, indem

a') in einem ersten Rechenschritt das Volumen V der Absorptionszone in N gleiche Volumenelemente $\Delta V_1$, $\Delta V_2...\Delta V_N$ unterteilt wird, die sich mit einer konstanten vorgegebenen Querschnittsfläche $\Delta F$ in Längsrichtung des Gasstromes vom Flüssigkeitssumpf bis zur Düsenebene erstrecken,

b') die in den Volumenelementen an den Sprühkegeln absorbierten Absorptionsgasmengenströme $\Delta\dot{m}_1$, $\Delta\dot{m}_2...\Delta\dot{m}_N$ ermittelt und mit einem Vorgabewert verglichen werden,

c') bei Abweichungen von dem Vorgabewert die Position einer oder mehrerer Düsen verändert wird und

d') die Schritte b') und c') so lange wiederholt werden, bis die Absorptionsgasmengenströme $\Delta\dot{m}_1$, $\Delta\dot{m}_2...\Delta\dot{m}_N$ in allen Volumenelementen $\Delta V_1$, $\Delta V_2...\Delta V_N$ außerhalb eines wandnahen Bereiches des Waschturms einen annähernd gleichen Wert besitzen.

Als Vorgabewert im Schritt b') wird zweckmäßig der Mittelwert aus den für die Volumenelemente $\Delta V_1$, $\Delta V_2...\Delta V_N$ ermittelten Absorptionsgasmengenströme $\Delta\dot{m}_1$, $\Delta\dot{m}_2...\Delta\dot{m}_N$ verwendet. Die beschriebenen Schritte für die Festlegung der Düsenverteilung beruhen auf der Modellvorstellung, dass der Gasaustausch in Querrichtung zur Strömung gegenüber der Vertikalströmung unbedeutend ist und ein Konzentrationsausgleich zwischen Bereichen hoher Konzentration und niedriger Konzentration durch Stoffaustauschvorgänge bei der Durchströmung der Absorptionszone nicht erfolgt. Die Schritte a') bis d') lehren ein methodisches Vorgehen, um die Modellvorstellung umzusetzen. Es versteht sich, dass in einer Wandzone nahe des Behältermantels des Waschturms die praktische Umsetzung nicht in vollem Umfang gelingt und in Wandnähe eine geringere volumenspezifische Anzahl von Tropfen in Kauf genommen werden muss, weil die wandnahen Düsen so positioniert werden, dass eine übermäßige Flüssigkeitsbenetzung am Behältermantel nicht auftritt.

Gemäß einer bevorzugten Ausführung der Erfindung wird der Verteiler in einer Symmetrieachse des Waschturmquerschnitts angeordnet und werden die Düsen in einer beiderseits des Verteilers identischen Verteilung spiegelbildlich zur Symmetrieachse angeordnet. Betrachtet man jeweils die Hälfte des Waschturmquerschnitts für sich, ist eine weitergehende Symmetrie in Bezug auf die Anordnung der Düsen nicht erkennbar, wenn man nach der erfindungsgemäßen Lehre arbeitet.

Die Düsenanordnung kann Düsen aus nach unten sprühenden Hohlkegeldüsen oder Vollkegeldüsen aufweisen. Es können ferner in an sich bekannter Weise mehrere Düsenebenen übereinander angeordnet werden.

Im Folgenden wird die Erfindung anhand einer lediglich ein Ausführungsbeispiel darstellenden Zeichnung erläutert. Es zeigen schematisch

Fig. 1 zwei in unterschiedlichen Düsenebenen angeordnete Düsen mit austretenden, sich überlappenden Sprühkegeln,

Fig. 2 die Düsenanordnung in einem Waschturm mit einer erfindungsgemäß eingerichteten Düsenverteilung,

Fig. 3 zum Vergleich eine Düsenanordnung nach dem Stand der Technik.

*(Die ursprünglichen Beschreibungsseiten 7 bis 11 schließen sich in unveränderter Reihenfolge an.)*

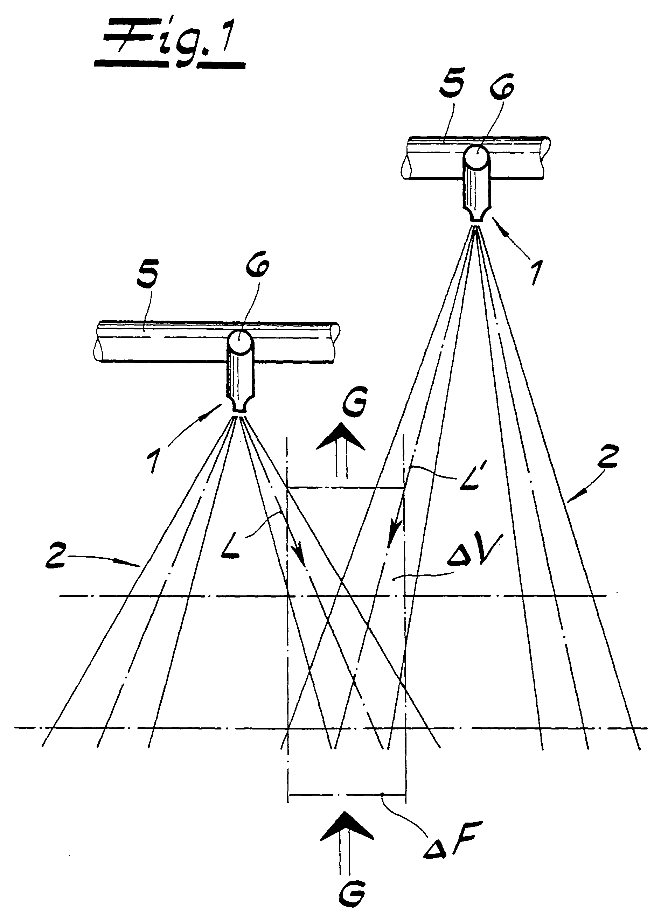

Die in Figur 1 dargestellten Düsen 1 sind Teil einer Düsenanordnung für einen Waschturm zur Rauchgasentschwefelung, der einen Waschflüssigkeitssumpf, eine einbautenfreie Absorptionszone und mehrere Düsenebenen oberhalb der Absorptionszone aufweist. Zu reinigendes Rauchgas G durchströmt die Absorptionszone im Gegenstrom zu den Sprühstrahlen L, L' der Düsen 1 von unten nach oben. Die Düsenanordnung weist eine große Zahl von Düsen 1 auf, deren Sprühkegel 2 sich in der in Figur 1 angedeuteten Weise überlappen.

Zur Festlegung der Düsenverteilung werden die örtlichen $SO_2$-Konzentrationen oberhalb der Düsenebene an N rasterförmig im Querschnitt des Waschturms angeordneten Stellen ermittelt. Die N Konzentrationswerte werden mit einem Vorgabewert verglichen, wobei als Vorgabewert der Mittelwert aus den N Konzentrationswerten verwendet wird. Bei Abweichungen von dem Vorgabewert wird die Position einer oder mehrerer Düsen 1 verändert. Die beschriebenen Schritte werden so lange wiederholt, bis die Konzentrationswerte außerhalb eines wandnahen Bereiches des Waschturms einen annähernd gleichen Wert besitzen.

Die Konzentrationen können durch Rechnersimulation ermittelt werden. Bei dieser wird das Volumen der Absorptionszonen in N gleiche Volumenelemente $\Delta V_1, \Delta V_2...\Delta V_N$ unterteilt, die sich mit einer konstanten vorgegebenen Querschnittsfläche $\Delta F$ in Längsrichtung des Gasstromes G vom Flüssigkeitssumpf bis zur Düsenebene erstrecken. In Figur 1 ist ein Ausschnitt aus einem der Volumenelemente $\Delta V$ dargestellt. Durch Massenbilanzen der ein und austretenden Stoffströme G, L, L' und den Gesetzmäßigkeiten für den

Stoffübergang zwischen Gasphase- und Flüssigkeitstropfen können die in den Volumenelementen $\Delta V_1, \Delta V_2...\Delta V_N$ an den Sprühkegeln 2 absorbierten Absorptionsgasmengenströmen $\Delta\dot{m}_1, \Delta\dot{m}_2...\Delta\dot{m}_N$ ermittelt werden. Zu den ein- und austretenden Stoffströmen gehören Flüssigkeitsanteile L, L' aus den Sprühkegeln 2 der Düsen 1 , wobei mit einer mittleren Tropfgröße die zur Verfügung stehende Austauschfläche $F_{Aus}$ errechnet werden kann. Die Berechnung des Stoffüberganges erfolgt nach der Gleichung

$$\Delta \dot{m} = \beta * F_{Aus.} * \Delta c$$

β: Stoffübergangskoeffizient

$F_{Aus}$:am Stoffaustausch teilnehmende Oberfläche der Tropfen

Δc: Konzentrationsgradient zwischen Gas- und Flüssigkeitsphase.

Bei der Berechnung des Stoffübergangskoeffizienten kann auf empirische, den Stoffübergang an Tropfen beschreibende Gleichungen

$$Sh = B + C * Re^m * Sc^n$$

Sh: Sherwoodzahl

Re: Reynoldszahl

Sc Schmidtzahl

zurückgegriffen werden.

Die in den Volumenelementen $\Delta V_1, \Delta V_2 ... \Delta V_N$ an den Sprühkegeln 2 absorbierten Absorptionsgasmengenströme $\Delta \dot{m}_1, \Delta \dot{m}_2 ... \Delta \dot{m}_N$ werden mit einem Vorgabewert verglichen, wobei als Vorgabewert der Mittelwert aus den für die Volumenelemente $\Delta V_1, \Delta V_2 ... \Delta V_N$ ermittelten Absorptionsgasmengenströme $\Delta \dot{m}_1, \Delta \dot{m}_2 ... \Delta \dot{m}_N$ verwendet wird. Bei Abweichungen von dem Vorgabewert wird die Position einer oder mehrere Düsen 1 verändert und die vorstehend erläuterten Schritte werden so lange wiederholt, bis die Absorptionsgasmengenströme $\Delta \dot{m}_1, \Delta \dot{m}_2 ... \Delta \dot{m}_N$ in allen Volumenelementen $\Delta V_1, \Delta V_2 ... \Delta V_N$ außerhalb eines wandnahen Bereiches des Waschturms einen annähernd gleichen Wert besitzen.

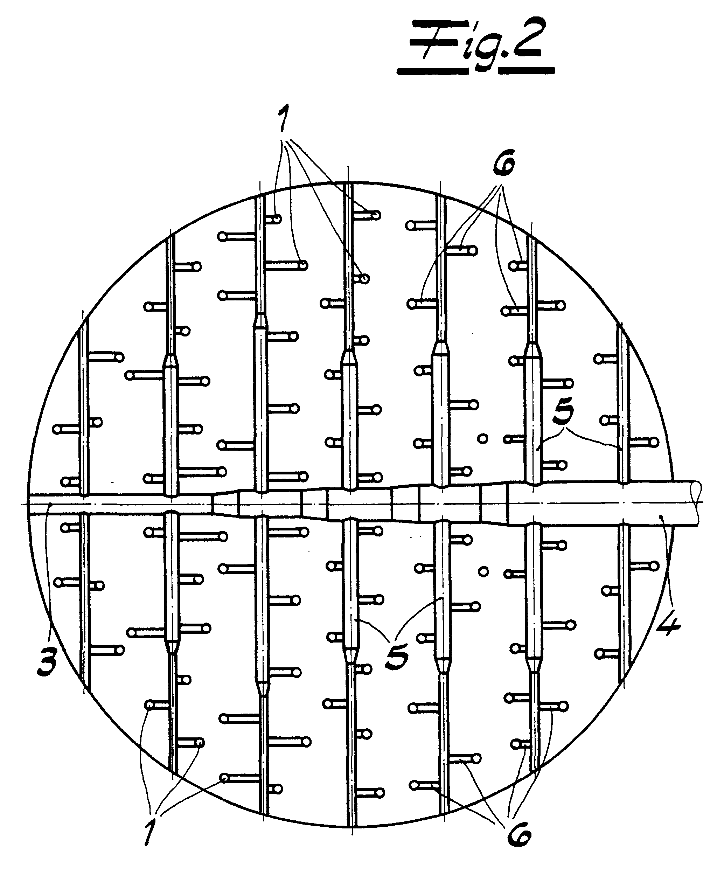

Die erfindungsgemäße Methode führt zu einer Düsenverteilung, die in Figur 2 für eine Düsenebene dargestellt ist. Die Düsenanordnung weist einen in einer Symmetrieachse 3 des Waschturmsquerschnitts angeordneten Verteiler 4 auf, an den rechts und links Abzweigleitungen 5 anschließen. Die Düsen 1 sind mit seitlich abgehenden Zwischenstücken 6 an die Abzweigleitungen 5 angeschlossen. Die Länge und Position der Zwischenstücke 6 sind so gewählt, daß sich eine Düsenverteilung ergibt, die nach der vorstehend erläuterten Methode festgelegt wurde. Zweckmäßig und ohne funktionsmäßige Beeinträchtigung kann die Düsenanordnung in bezug auf die durch den Verteiler 4 vorgegebene Symmetrieachse 3 spiegelbildlich ausgebildet sein. Der Figur 2 entnimmt man, daß die Düsen 1 in einer beiderseits des Verteilers 4 identischen Verteilung spiegelbildlich zur Symmetrieachse 3 angeordnet sind. Innerhalb einer Hälfte des Waschturmsquerschnitts sind jedoch keine Symmetrien erkennbar. Vielmehr erfolgt dort eine individuelle Festlegung der Länge und Position der Zwischenstücke 6 für jede Düse 1.

Nach dem Einbau der Düsen entsprechend der vorgegebenen Düsenverteilung werden die örtlichen SO$_2$-Konzentrationen oberhalb der Düsenebene an N rasterförmig im Querschnitt des Waschturms angeordneten Meßstellen meßtechnisch erfaßt. Werden an Meßstellen noch Konzentrationsabweichungen von dem aus dem N Meßwerten errechneten Mittelwert festgestellt, die außerhalb eines engen Toleranzbereiches liegen, so werden an einer oder mehreren Düsen 1 die Länge und Position der Zwischenstücke6 verändert; anschließend werden erneute Messungen durchgeführt. Das Vorgehen wird so lange wiederholt, bis alle N Konzentrationsmeßwerte innerhalb eines vorgegebenen engen Bandbereiches liegen.

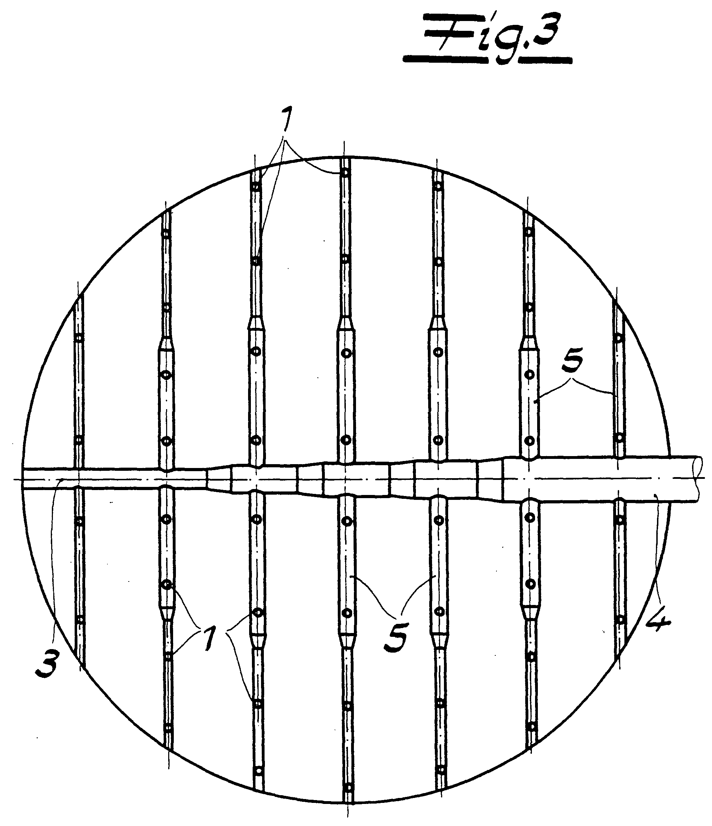

In Figur 3 ist zum Vergleich eine Düsenanordnung nach dem Stand der Technik dargestellt. Die Düsen 1 sind hier mit äquidistanten Abständen an den Abzweigleitungen 5 oder unter Zwischenschaltung kurzer Düsenstöcke in unmittelbarer Nähe an die Abzweigleitungen 5 angeschlossen. Es resultiert eine durch geometrische Symmetrien geprägte Anordnung. Länge und Position der Düsenstöcke sind nicht für jede Düse 1 individuell festgelegt. Bei einer Düsenanordnung nach dem Stand der Technik kann das den Waschturm verlassende Gas noch Strähnen mit hohen Schadstoffkonzentrationen aufweisen, insbesondere wenn die Länge der Absorptionszone kurz ist und mit verhältnismäßig kleinen Waschflüssigkeitsmengen gearbeitet wird.

Die erfindungsgemäße Düsenanordnung ermöglicht eine optimale Ausnutzung der für die Gaswäsche zur Verfügung stehenden Flüssigkeit. Stellen mit hoher Schadgaskonzentration treten in dem den Waschturm verlassenden gewaschenen Gas nicht mehr auf. Es resultiert ein insgesamt wesentlich verbesserter Absorptionswirkungsgrad.

**Patentansprüche**

1. Verfahren zur Einrichtung einer aus Verteiler, Abzweigleitungen und Düsen bestehenden Düsenanordnung in einem Waschturm, der einen Waschflüssigkeitssumpf, eine einbautenfreie Absorptionszone und mindestens eine Düsenebene oberhalb der Absorptionszone aufweist, wobei die Düsen mit seitlich abgehenden Zwischenstücken an die Abzweigleitungen angeschlossen werden und wobei

   a) die örtlichen Konzentrationen der aus einem Gasstrom zu absorbierenden Komponente oberhalb der Düsenebene an einer Mehrzahl N rasterförmig im Querschnitt des Waschturms angeordneten Stellen gemessen werden,

b) die Konzentrationswerte mit einem aus den Messwerten gebildeten Mittelwert verglichen werden,

c) bei Abweichungen, die einen vorgegebenen Toleranzbereich überschreiten, die Position einer oder mehrerer Düsen verändert wird und

d) die Schritte a) bis c) so lange wiederholt werden, bis die Konzentrationsmesswerte einen annähernd gleichen Wert besitzen.

2. Verfahren nach Anspruch 1, **dadurch gekennzeichnet, dass** der Verteiler in einer Symmetrieachse des Waschturmquerschnitts angeordnet wird und dass die Düsen in einer beiderseits des Verteilers identischen Verteilung spiegelbildlich um die Symmetrieachse angeordnet werden.

3. Verfahren nach Anspruch 1 oder 2, **dadurch gekennzeichnet, dass** als Düsen nach unten sprühende Hohlkegeldüsen oder Vollkegeldüsen verwendet werden.

**Claims**

1. A method of installing a nozzle arrangement, consisting of distributor, branch lines and nozzles, in a scrubbing tower which comprises a scrubbing liquid sump, an absorption zone which is free from built-in components, and at least one nozzle plane above the absorption zone, wherein the nozzles are connected to the branch lines by transition pieces which lead off laterally, and wherein

a) the local concentrations of the component to be absorbed from a gas stream are measured above the nozzle plane at a plurality N of points which are disposed in the form of a grid over the cross-section of the scrubbing tower,

b) the values of the concentrations are compared with a mean value formed from the measured values,

c) when there are differences which exceed a predetermined range of tolerance, the position of one or more nozzles is changed, and

d) steps a) to c) are repeated until the value of the concentration readings is approximately the same.

2. A method according to claim 1, **characterised in that** the distributor is disposed on an axis of symmetry of the scrubbing tower cross-section, and that the nozzles are disposed with mirror symmetry about the axis of symmetry in a distribution which is identical on both sides of the distributor.

3. A method according to claims 1 or 2, **characterised in that** hollow-cone nozzles or solid-cone nozzles which spray downwards are used as nozzles.

**Revendications**

1. Procédé d'installation d'un agencement à tuyères consistant en un distributeur, en des conduites de dérivation et en tuyères dans une tour de lavage qui présente un puisard de liquide de lavage, une zone d'absorption dépourvue de pièces intégrées et au moins un plan de tuyères au dessus de la zone d'absorption, les tuyères étant raccordées aux conduites de dérivation par des pièces intermédiaires à distribution latérale et

a) les concentrations locales des composants à absorber dans un flux de gaz étant mesurées au dessus du plan de tuyères à une pluralité N de points disposés en forme de trame dans la section transversale de la tour de lavage,

b) les valeurs de concentration étant comparées à une valeur moyenne constituée à partir des valeurs de mesure,

c) en cas d'écarts qui dépassent une plage de tolérance prédéfinie, la position d'une ou plusieurs tuyères étant modifiée et

d) les étapes a) à c) étant répétées jusqu'à ce que les valeurs de mesure de concentration possèdent une valeur approximativement égale.

2. Procédé selon la revendication 1, **caractérisé en ce que** le distributeur est disposé dans un axe de symétrie de la section transversale de la tour de lavage et que les tuyères sont disposées avec une répartition identique des deux côtés du distributeur et en symétrie miroir autour de l'axe de symétrie.

3. Procédé selon la revendication 1 ou 2, **caractérisé en ce qu'**on utilise comme tuyères des tuyères à cône creux ou des tuyères à cône plein aspergeant vers le bas.

# Fig.1

Fig.2

Fig.3